# DEMANDE DE BREVET EUROPEEN

(11) **EP 1 810 983 A1**
(43) Date de publication de la demande: **25.07.2007**
(21) Numéro de dépôt: 07290044.2
(22) Date de dépôt: 11.01.2007
(51) Int. Cl.: C08G 18/10, C08G 18/32, G02B 1/04

(54) **Composition polymerisable à base de polyuréthanne-urée et de copolymères à blocs et matériau transparent obtenu à partir de celle-ci**

(30) Priorité: 20.01.2006 FR 0600551
(71) Demandeur: ESSILOR INTERNATIONAL Compagnie Générale d'Optique, F-94220 Charenton le Pont (FR)
(72) Inventeur: Jaffrennou, Boris, 94220 Charenton-le-Pont (FR); Lesartre, Noémie, 94220 Charenton-le-Pont (FR); Mechin, Françoise, 69621 Villeurbanne (FR); Pascault, Jean-Pierre, 69621 Villeurbanne (FR)
(74) Mandataire: Cabinet Plasseraud

(57) **Abrégé**

Composition polymérisable comprenant (a) un prépolymère de type polyuréthanne et (b) une diamine aromatique notamment de formule (I), en une quantité telle que le rapport du nombre de fonctions amine de la diamine de formule (I) au nombre de fonctions isocyanate du prépolymère (a) est compris entre 0,92 et 0,98, et au moins 5 % en poids, rapporté à la masse totale de (a), (b) et (c), d'un copolymère à blocs polystyrène-*bloc*-polybutadiène-*bloc*-poly(méthacrylate de méthyle); procédé de préparation d'une telle composition et matériau optique transparent obtenu par traitement thermique de ladite composition.

## Description

La présente invention concerne de nouvelles compositions polymérisables à base de polyols, de polyisocyanates, de diamines et de copolymères à blocs, des matériaux finis transparents obtenus par réaction de ces compositions ainsi qu'un procédé de préparation des compositions polymérisables et des matériaux finis transparents. Ces matériaux sont particulièrement utiles pour la réalisation d'articles optiques et plus particulièrement d'articles ophtalmiques.

Il existe deux types de substrats généralement utilisés pour la fabrication d'articles d'optique, notamment de lentilles ophtalmiques, à savoir les substrats en verre minéral et les substrats en verre organique. Actuellement le marché se développe très largement en faveur des verres organiques qui présentent l'avantage d'être plus légers que les verres minéraux et de présenter une meilleure résistance aux chocs. Les substrats en verre organique les plus utilisés sont le polycarbonate thermoplastique et celui obtenu par polymérisation de bis(allylcarbonate) de diéthylèneglycol.

Dans le cadre de ses recherches visant à développer continuellement de nouveaux matériaux performants pour la fabrication de matériaux optiques, la Demanderesse a trouvé que les matériaux de type polyuréthanne-urée sont des candidats intéressants pour la fabrication de matériaux transparents susceptibles d'être utilisés par exemple pour la fabrication de produits optiques, notamment de lentilles ophtalmiques. Les polyuréthanne-urées sont des polymères obtenus par polycondensation de polyols, de polyisocyanates et de diamines. Par exemple, la réaction d'oligodiols avec des diisocyanates aboutit à la formation de chaînes polyuréthanne souples tandis que les diamines forment par réaction avec les diisocyanates des segments polyurée rigides. Lorsque la polycondensation de ces réactifs est mise en oeuvre dans des conditions permettant l'obtention d'une fraction importante de segments rigides, il se forme un matériau présentant un module de Young E élevé, constitué d'une matrice rigide dans laquelle sont dispersés des microdomaines souples formés par les chaînes polyuréthanne. La combinaison des segments rigides de type polyurée et de chaînes souples de type polyuréthanne confère aux matériaux en question une excellent combinaison de propriétés chimiques et physiques particulièrement intéressante pour des applications optiques, et plus spécifiquement ophtalmiques.

De tels matériaux sont connus de l'homme de l'art. Néanmoins la manipulation de ces produits sous forme liquide, état sous lequel ces composés existent, est contraignante. Cette contrainte est renforcée par le fait que les isocyanates sont des composés toxiques nécessitant des conditionnements spécifiques pour leur manipulation et leur stockage sous forme liquide. Enfin, ces produits à l'état liquide présentent généralement une réactivité élevée qui limite leur aptitude au stockage dans de bonnes conditions.

La réaction entre une fonction isocyanate et une amine peut être très rapide, de l'ordre de la seconde, et la mise en oeuvre des polyuréthanne-urées nécessite par conséquent l'utilisation de procédés assez complexes tels que les moulages par injection-réaction (Reaction Injection Molding, RIM) ou par transfert de résine (Resin Transfer Molding, RTM). Il peut être intéressant de pouvoir mettre en oeuvre les polyuréthanne-urées par des procédés plus simples tels que l'extrusion, l'injection ou la co-extrusion, ainsi que de pouvoir disposer de compositions permettant d'obtenir de tels polyuréthanne-urées sous une forme solide, beaucoup plus facile à stocker, à conditionner et à mettre en oeuvre.

Une approche intéressante pour l'obtention de tels matériaux polyuréthane-urée est l'incorporation, dans ces matériaux, de copolymères à blocs. L'incorporation de tels copolymères à blocs dans des matrices époxydes est notamment décrite dans la demande internationale WO 01/92415. Les matériaux époxy modifiés par l'introduction de copolymères à blocs conservent leur transparence, voient leurs propriétés mécaniques améliorées et ne subissent qu'une faible chute de leur température de transition vitreuse Tg.

Ainsi, la Demanderesse a formulé de nouvelles compositions polymérisables à base de polyols, de polyisocyanates, d'amines et de copolymères à blocs, répondant à cette demande.

La présente invention a par conséquent pour objet une composition polymérisable comprenant :
(a) un prépolymère de type polyuréthanne obtenu par polycondensation:
   1) d'un ou plusieurs polyisocyanates choisis parmi le xylylène-diisocyanate (XDI), le *méta*-tétraméthyl-xylène-diisocyanate (TMXDI), les diisocyanates cycloaliphatiques, le trimère de l'isophorone-diisocyanate, et le trimère de l'hexaméthylène-diisocyanate; et
   2) d'un ou plusieurs polyols choisis parmi la famille des bisphénols A polypropoxylés comportant en moyenne de 1 à 10 motifs d'oxyde de propylène de part et d'autre du groupement central bisphénol A, la famille des bisphénols A polyéthoxylés comportant en moyenne de 1 à 15 motifs d'oxyde d'éthylène de part et d'autre du groupement central bisphénol A, et la famille des polycaprolactones-alcools difonctionnels, trifonctionnels et tétrafonctionnels;
(b) une diamine aromatique choisie parmi la diéthyltoluène-diamine (DETDA) ou une amine de formule (1): 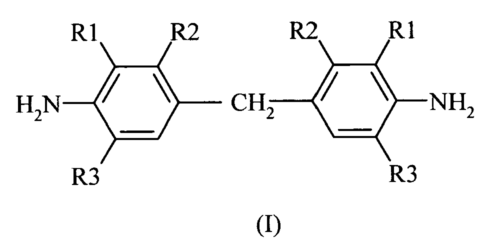 dans laquelle R1 et R3, identiques ou différents, représentent chacun indépendamment l'un de l'autre un groupe choisi parmi méthyle, éthyle, n-propyle et isopropyle, et R2 représente un atome d'hydrogène ou un atome de chlore, en une quantité telle que le rapport du nombre de fonctions amine de la diamine sur le nombre de fonctions isocyanate du prépolymère (a) est compris entre 0,92 et 0,98; et
(c) au moins 5 % en poids, rapporté à la masse totale de (a), (b) et (c), d'un copolymère à blocs polystyrène-bloc-polybutadiène-bloc-poly(méthacrylate de méthyle) (PS-*b*-PB-*b*-PMMA).

Une telle composition, après réaction sous l'effet de la chaleur, donne lieu à un matériau de polyuréthanne-urée (PUU) ayant une transparence permettant son utilisation en tant que matériau optique, par exemple pour la fabrication de lentilles ophtalmiques.

La présente invention a par conséquent en outre pour objet un matériau transparent obtenu par réaction sous l'effet de la chaleur de la composition polymérisable ci-dessus, ainsi qu'un article optique, de préférence une lentille ophtalmique, comprenant un tel matériau.

Dans la présente demande, les définitions de certains termes doivent être comprises de la façon suivante :
- par article optique on entend les lentilles optiques d'instrumentation et de visée, les visières et les lentilles ophtalmiques, ainsi que les films de qualité optique pouvant éventuellement être utilisé au sein d'une lentille optique, d'une visière ou d'une lentille ophtalmique;
- par lentille ophtalmique, on entend les lentilles s'adaptant notamment à une monture de lunette, ayant pour fonction de protéger l'oeil et/ou de corriger la vue, ces lentilles étant choisies parmi les lentilles afocales, unifocales, bifocales, trifocales et progressives,

La présente invention a également pour objet un procédé de préparation de la composition polymérisable et un procédé de préparation du matériau polyuréthane-urée qui seront décrits plus en détail ci-après.

Il est important pour la présente invention de préparer une composition polymérisable contenant un prépolymère de polyuréthanne synthétisé au préalable, c'est-à-dire avant réaction avec le réactif diaminé. En effet, la réactivité des fonctions isocyanate vis-à-vis des fonctions amines est considérablement supérieure à celle des fonctions isocyanate vis-à-vis des fonctions alcool des polyols et la mise en contact simultanée des trois réactifs aboutirait à la formation très rapide de longues séquences rigides de type polyurée avec très peu, voire pas de séquences polyuréthane souples.

Il est important d'utiliser pour la formation du prépolymère de polyuréthanne par polycondensation un excès molaire de polyisocyanates par rapport aux polyols. On utilisera de préférence de 2 à 3 équivalents molaires de polyisocyanate par mole de polyol. Ce rapport molaire laissera subsister, à l'issue de la réaction complète des fonctions alcool, une fraction importante de fonctions isocyanate n'ayant pas réagi, lesquelles restent disponibles pour la réaction de polycondensation avec la diamine.

Selon une variante préférée, la composition polymérisable selon l'invention comprend:
(a) un prépolymère de type polyuréthanne-düsocyanate obtenu par polycondensation d'un diisocyanate cycloaliphatique et de bisphénol A polypropoxylé comportant en moyenne de 1 à 10 motifs d'oxyde de propylène (PO) de part et d'autre du groupement bisphénol A,
(b) une diamine aromatique de formule : 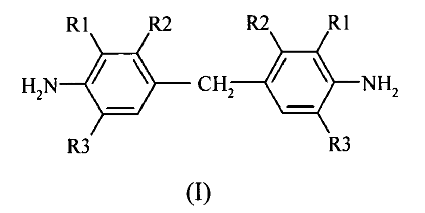 dans laquelle R1 et R3 identiques ou différents, représentent chacun indépendamment l'un de l'autre un groupe choisi parmi méthyle, éthyle, n-propyle et isopropyle, et R2 représente un atome d'hydrogène ou un atome de chlore,
   en une quantité telle que le rapport du nombre de fonctions amine de la diamine de formule (I) au nombre de fonctions isocyanate du prépolymère (a) est compris entre 0,92 et 0,98,
(c) de 5% à 80 % en poids, rapporté à la masse totale de (a), (b) et (c), d'un copolymère à blocs polystyrène-*bloc*-polybutadiène-*bloc*-poly(méthacrylate de méthyle).

Selon un mode de réalisation préféré de l'invention, l'isocyanate utilisé est un diisocyanate-cycloaliphatique. Le diisocyanate préféré pour la préparation des matériaux polyuréthanne-urée de la présente invention est l'isophorone-diisocyanate (IPDI).

Les diamines de formule (I) sont préférées dans le cadre de l'invention.

La diamine de formule (I) particulièrement préférée est la 4,4'-méthylène-bis[3-chloro-2,6-diéthylaniline] (MCDEA).

Dans la présente invention, on utilisera de préférence pour la préparation du prépolymère de polyuréthanne un ou plusieurs polyols choisis dans la famille des bisphénols A polypropoxylés comprenant en moyenne de 3,5 à 8 motifs d'oxyde de propylène de part et d'autre du groupement central bisphénol A ou dans la famille des bisphénols A polyéthoxylés comprenant en moyenne de 3 à 6 motifs d'oxyde d'éthylène de part et d'autre du groupement central bisphénol A. D'une façon particulièrement avantageuse, on utilisera dans le cadre de l'invention un bisphénol A polypropoxylé comprenant en moyenne 3,5, 5,5 et 7,5 motifs d'oxyde de propylène de part et d'autre du groupement central bisphénol A, appelés ci-après respectivement BPA-PO3,5, BPA-PO5,5 et BPA-PO7,5.

Il est en outre important d'utiliser dans la composition polymérisable de la présente invention un rapport molaire du nombre de fonctions amine au nombre de fonctions isocyanate proche de 1 mais légèrement inférieur à cette valeur. En effet, une presque stoechiométrie de ces deux types de fonctions assure un degré de polymérisation suffisant pour l'obtention d'un matériau de haute masse molaire à température de transition vitreuse élevée, utilisable notamment pour la fabrication de lentilles ophtalmiques. Le nombre de fonctions amine doit toutefois être inférieur au nombre de fonctions isocyanate pour assurer que le matériau final polymérisé soit exempt de fonctions amine libres qui entraîneraient un jaunissement progressif au cours du temps du matériau transparent polymérisé.

Le rapport du nombre de fonctions amine de la diamine de formule (I) au nombre de fonctions isocyanate du prépolymère (a) est ainsi de préférence compris entre 0,93 et 0,97, plus préférentiellement entre 0,94 et 0,96 et en particulier d'environ 0,95.

La composition polymérisable de la présente invention contient de préférence de 30 à 80 % en poids, rapporté à la masse totale de (a), (b) et (c), plus préférentiellement de 40 à 60 % en poids et en particulier environ 50 % en poids d'un copolymère à bloc polystyrène-*bloc*-polybutadiène-*bloc*-poly(méthacrylate de méthyle) (PS-*b*-PB-*b*-PMMA). Cette quantité minimale permet une amélioration des propriétés physiques et notamment mécaniques du matériau obtenu à partir de cette composition polymérisable.

Les copolymères à blocs utilisables dans le cadre de l'invention sont notamment décrits dans les demandes de brevet WO 2005/073314 et WO 2005/014699. On se référera particulièrement à ces documents pour une description détaillée des parties PS, PB et PMMA de ces copolymères à blocs.

Enfin, il est important pour l'obtention de matériaux polyuréthane-urée transparents que le bloc poly(méthacrylate de méthyle) (PMMA) du polymère à blocs représente une fraction importante du copolymère à blocs. Selon une variante avantageuse de l'invention, le bloc de PMMA représente de préférence de 50 % à 80 % en poids, plus préférentiellement de 55 % à 75 % en poids, et en particulier de 60 à 70 % en poids de la masse moléculaire moyenne en poids du copolymère à blocs polystyrène-bloc-polybutadiène-bloc-poly(méthacrylate de méthyle).

Pour des raisons similaires, la masse moléculaire moyenne en poids dudit bloc poly(méthacrylate de méthyle) est de préférence comprise entre 10 000 et 100 000 g/mol, pour une masse molaire moyenne globale du copolymère à blocs de préférence comprise entre 15 000 et 200 000 g/mol.

Dans le cadre de l'invention il est entendu que les copolymères à blocs utilisés peuvent être un mélange de copolymères triblocs et de copolymères diblocs de type polystyrène-*bloc*-polybutadiène. Ces copolymères sont notamment décrits dans la demande de brevet WO 2005/073314.

Les matériaux polyuréthane-urée obtenus à partir des compositions polymérisables décrites ci-dessus présentent une transparence adaptée pour une utilisation dans le domaine de l'optique et en particulier dans le domaine ophtalmique. Cette transparence est liée à la nanostructuration du matériau par les copolymères à blocs conduisant à la formation de nanodomaines contenant au moins le bloc PMMA dudit copolymère triblocs. Ces nanodomaines présentent avantageusement une taille comprise entre 10 et 80 nm, en particulier entre 20 et 60 nm.

La résistance à la propagation de fissures des matériaux polyuréthanne-urée se trouve significativement améliorée par rapport aux matériaux polyurethanne-urée correspondants exempts de copolymères à blocs. Ainsi, le facteur critique d'intensité de contrainte K_{1C} (en MPa·m^{1/2}), mesuré selon les normes ASTM E399 ou ASTM E 1820 sur des éprouvettes normalisées préfissurées, est généralement supérieure d'au moins 10 % à celui du matériau PUU correspondant exempt de copolymère à blocs.

Le facteur critique d'intensité de contrainte K_{IC} (en MPa.m^{1/2}) des matériaux polyurethanne-urée selon l'invention est généralement supérieur à 1,45 MPa.m^{1/2}, de préférence supérieur à 1,50 MPa.m^{1/2}, et en particulier supérieur à 1,55 MPa.m^{1/2}.

Pour améliorer certaines propriétés des produits d'optique fabriqués à partir des compositions polymérisables de la présente invention, par exemple la résistance aux chocs, la résistance à l'abrasion et aux rayures, le caractère anti-réfléchissant et la résistance aux salissures, il est possible de former sur au moins une des surfaces principales un ou plusieurs revêtements fonctionnels. Il est ainsi tout à fait possible de former successivement sur une face principale de l'article d'optique en polyuréthanne-urée selon l'invention un premier revêtement, appelé primaire anti-choc, dont la fonction est d'accroître la résistance aux chocs de l'article mais aussi l'adhésion au substrat de revêtements ultérieurs puis, sur ce revêtement de primaire anti-choc, un revêtement dur, généralement appelé revêtement anti-abrasion ou anti-rayures, dont le but est d'améliorer la capacité de la surface de l'article d'optique à résister aux endommagements dus à des agressions mécaniques. Il est aussi possible de superposer au revêtement anti-abrasion un revêtement anti-reflet, auquel se superpose éventuellement un revêtement anti-salissure dont le rôle est de modifier la tension interfaciale entre la couche anti-reflet et l'eau ou la graisse mais également d'obstruer les interstices afin d'empêcher la graisse de s'infiltrer et de subsister. L'article optique peut également comporter un revêtement antistatique.

Comme indiqué précédemment, la présente invention a également pour objet un procédé de préparation d'une composition polymérisable telle que décrite ci-avant, comprenant :
1. la préparation d'une première composante (A) par mélange:
   - d'un prépolymère de type polyuréthanne obtenu par polycondensation :
      1) d'un ou plusieurs polyisocyanates choisis parmi le xylylène-diisocyanate (XDI), le méta-tétraméthyl-xylène-düsocyanate (TMXDI), les diisocyanates cycloaliphatiques, le trimère de l'isophorone-diisocyanate, et le trimère de l'hexaméthylène-diisocyanate; et
      2) d'un ou plusieurs polyols choisis parmi la famille des bisphénols A polypropoxylés comportant en moyenne de 1 à 10 motifs d'oxyde de propylène de part et d'autre du groupement central bisphénol A, la famille des bisphénols A polyéthoxylés comportant en moyenne de 1 à 15 motifs d'oxyde d'éthylène de part et d'autre du groupement central bisphénol A, et la famille des polycaprolactones-alcools difonctionnels, trifonctionnels et tétrafonctionnels; les fonctions isocyanate étant présentes en excès par rapport aux fonctions alcools;
   - avec un copolymère à blocs polystyrène-*bloc*-polybutadiène-bloc-poly(méthacrylate de méthyle), le rapport en poids du prépolymère au copolymère à blocs étant compris entre 95/5 et 20/80,
2. la préparation d'une deuxième composante (B) par mélange:
   - d'une diamine choisie parmi la diéthyltoluène diamine (DETDA) ou une amine de formule (I): 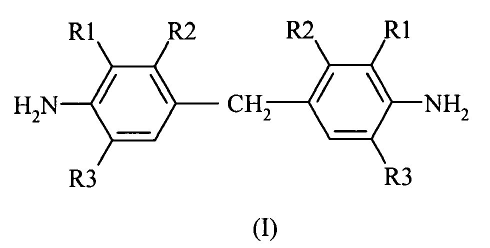 dans laquelle R1 et R3, identiques ou différents, représentent chacun indépendamment l'un de l'autre un groupe choisi parmi méthyle, éthyle, n-propyle et isopropyle, et R2 représente un atome d'hydrogène ou un atome de chlore,
   - avec un copolymère à blocs polystyrène-*bloc*-polybutadiène-*bloc*-poly(méthacrylate de méthyle), le rapport en poids de l'amine au copolymère à blocs étant compris entre 95/5 et 20/80;
      (3) puis le mélange de la première composition (A) avec la deuxième composition (B) en des quantités respectives telles que le rapport du nombre de fonctions amine de la diamine au nombre de fonctions isocyanate du prépolymère (a) soit compris entre 0,92 et 0,98.

Bien entendu l'ensemble des préférences indiquées ci-dessus à propos de la composition polymérisable s'applique aux caractéristiques techniques du procédé de préparation de celle-ci.

La préparation d'une telle composition polymérisable est particulièrement facilitée par ses possibilités de mise en oeuvre. Ainsi la préparation de la première composante réactive (A) et la préparation de la deuxième composante réactive (B) par mélange de leurs composants respectifs se font de façon séparée et autonome, de préférence par extrusion dans une extrudeuse, de préférence une extrudeuse à double vis, à des températures maximales comprises entre 100 °C et 150 °C. Cette extrusion est suivie de préférence par la granulation des joncs extrudés en sortie de filière. Les granulés peuvent être stockés facilement. Grâce au procédé de mise en oeuvre de la composition polymérisable selon l'invention il est donc possible d'obtenir et de stocker dans des conditions de température ambiante les deux composantes précurseurs du matériau fini polyuréthanne-urée de façon indépendante et stable chimiquement.

Les granulés ainsi obtenu peuvent ensuite être introduits en les proportions appropriées de (A) et (B) dans une extrudeuse, de préférence une extrudeuse double vis, à une température maximale comprise entre 120 et 140 °C, de préférence à une température comprise entre 125 et 135 °C.

La composition polymérisable extrudée ainsi obtenue conduit alors à une composition polymérisable intermédiaire sous forme d'un mélange réactif. Le stockage à une température inférieure à la température ambiante de ce mélange réactif assure la stabilité des propriétés physico-chimiques et mécanique de celui-ci. Cette composition polymérisable intermédiaire peut ainsi être stockée sous formes de granulés ou bien de film selon la géométrie de la filière utilisée en sortie de l'extrudeuse.

Dans une autre variante, les deux composantes (A) et (B) précurseurs du matériau fini polyuréthanne-urée obtenues sous forme de granulés indépendants tels que décrits précédemment peuvent être co-extrudées. Dans une telle configuration du procédé, on obtient une composition polymérisable intermédiaire sous forme de granulés ou de film ne présentant pas de mélange intime entre les fonctions réactives de la première composante (A) et les fonctions réactives de la seconde composante (B), mais uniquement une interface ou interphase entre ces deux entités. Une telle composition polymérisable est stable et peut être conservée aisément à température ambiante. Elle peut également être utilisée telle quelle notamment si elle se présente sous la forme d'un film.

La composition polymérisable extrudée ou co-extrudée ainsi obtenue peut ensuite être mise en oeuvre, par exemple par moulage, injection-moulage ou thermoformage, et exposée à une température comprise entre 100°C et 170 °C pendant une durée comprise entre 1 heure et 15 heures de manière à obtenir un matériau polyuréthanne-urée selon la présente invention.

Selon une autre variante préférentielle de l'invention, la première composante (A) sous forme de granulés et la deuxième composante (B) sous forme de granulés, sont mélangées à stoechiométrie (ou quasi-stoechiométrie), versées dans la trémie d'une presse à injecter puis injectées dans un moule. La polymérisation thermique au sein du moule de la presse à injecter permet l'obtention d'un produit comprenant un matériau transparent polyuréthanne-urée à base d'une composition polymérisable selon l'invention. Le moule de la presse à injecter est avantageusement un insert de lentille ophtalmique permettant ainsi d'obtenir des lentilles ophtalmiques.

L'invention est à présent illustrée à l'aide d'un exemple selon l'invention.

### Exemple 1

Un prépolymère [IPDI/BPA-PO7,5] (-NCO/-OH = 3/1) a été synthétisé en masse dans un réacteur double enveloppe en verre à 110 °C pendant 12 heures sous atmosphère inerte (argon). Les quantités de chacun des monomères incorporées dans le réacteur sont les suivantes :
m_{IPDI} = 563,8 g (37,5 %)
M_{BPA-PO7,5} = 939,5 g (62,5 %)

La comparaison entre les valeurs théoriques et expérimentales obtenues par dosage chimique des fonctions isocyanate confirme que la réaction de formation du prépolymère est complète après ce laps de temps. De plus, l'équivalent isocyanate n'évolue plus en fonction du temps après 12 h.
⇒ Eq_{NCO} théorique (prépolymère)* = 2,24 mole de fonctions -NCO/kg de prépolymère
⇒ Eq_{NCO} expérimental (prépolymère) = 2,18 (± 0,04) mole de fonctions -NCO/kg de prépolymère
   *L'équivalent NCO théorique est calculé à partir des masses molaires des produits (alcool et isocyanate) déterminées par dosage chimique (respectivement normes NF T52-112 et NF T52-132).

Le copolymère à blocs utilisé dans cet exemple est un PS-*b*-PB-*b*-PMMA de masse molaire moyenne en poids de 41 900 g/mol ayant une fraction massique de bloc PMMA supérieure à 50 %.

Deux joncs prépolymère/PS-*b*-PB-*b*-PMMA et MCDEA/PS-*b*-PB-*b*-PMMA sont extrudés séparément puis granulés en sortie de filière. Les granulés prépolymère/PS-*b*-PB-*b*-PMMA et MCDEA/ PS-*b*-PB-*b*-PMMA ont été préparés en utilisant une extrudeuse bi-vis co-rotative Clextral BC21. La vitesse de vis a été fixée à 200 tours/min.

Les PS-*b*-PB-*b*-PMMA et la MCDEA se présentant sous forme de poudre, les deux poudres sont mélangées à sec (*dry blend*) à hauteur de 50 % en masse de chacune. Le mélange de poudres est versé dans la trémie à un débit de 2 kg/h grâce à une pompe K-Tron EDDER de chez Division Instruments. L'extrusion se fait à une température maximale de 110 °C. Le jonc obtenu en sortie de filière est ensuite granulé.

Le prépolymère se présente sous forme d'un liquide visqueux à température ambiante. Il est versé dans la trémie directement sur la vis à 110 °C grâce à une pompe péristaltique Pumpdrive 5001 (Heidolph) à un débit de 1 kg/h. Le PS-*b*-PB-*b*-PMMA est incorporé dans la trémie à un débit de 1 kg/h en utilisant la même pompe que précédemment, de manière à mettre en oeuvre des mélanges prépolymère/PS-*b*-PB-*b-*PMMA à hauteur de 50 % en masse de chacun des produits. Le jonc est également granulé en sortie de filière. Le dosage chimique des fonctions isocyanate dans les granulés prépolymère/SBM permet de vérifier l'homogénéité des débits des deux pompes. Les valeurs obtenues indiquent que les fonctions -NCO n'ont pas (ou très peu) été dégradées lors de l'extrusion et que le produit formé tout au long de l'opération est relativement homogène (peu de disparité dans les mesures réalisées sur des granulés prélevés à différents moments de l'opération).
⇒ Eq_{NCO} expérimental (granulés prépolymère/ PS-b-PB-b-PMMA) = 1,05 (± 0,1) mole de fonctions NCO / kg de granulés.

On obtient ainsi deux lots de granulés homogènes au niveau macroscopique prépolymère/ PS-*b*-PB-*b*-PMMA et MCDEA/ PS-*b*-PB-*b*-PMMA.

Les deux types de granulés sont mélangés sous forme solide au rapport -NH₂/-NCO = 0,95, d'après l'équivalent isocyanate déterminé par dosage chimique des granulés isocyanate/PS-b-PB-b-PMMA et l'équivalent amine calculé à partir de la masse molaire de la MCDEA (mélange MCDEA/PS-*b*-PB-*b*-PMMA 50/50). Les masses de granulés mélangés sont les suivantes :
*m*_{*granulés prépolymère*/}*_{PS-b-PB-b-PMMA} =* 1812,8 g
*m*_{*granulés MCDEA*/*PS-b-PB-b-PMMA*} = 687,1 g

Le mélange est extrudé dans une extrudeuse double vis à une température maximale de 130 °C.

Le produit obtenu est parfaitement transparent et présente des propriétés mécaniques satisfaisantes (résistance aux chocs, résistance à la propagation de fissures) pour pouvoir être utilisé en tant que matériau d'optique, en particulier pour la fabrication de lentilles ophtalmiques.

## Revendications

1. Composition polymérisable comprenant :
(a) un prépolymère de type polyuréthanne obtenu par polycondensation :
1) d'un ou plusieurs poly-isocyanates choisis parmi le xylylène-düsocyanate (XDI), le *méta*-tétraméthyl-xylène-düsocyanate (TMXDI), les diisocyanates cycloaliphatiques, le trimère de l'isophorone-diisocyanate, et le trimère de l'hexaméthylène-düsocyanate; et
2) d'un ou plusieurs polyols choisis parmi la famille des bisphénols A polypropoxylés comportant en moyenne de 1 à 10 motifs d'oxyde de propylène de part et d'autre du groupement central bisphénol A, la famille des bisphénols A polyéthoxylés comportant en moyenne de 1 à 15 motifs d'oxyde d'éthylène de part et d'autre du groupement central bisphénol A, et la famille des polycaprolactones-alcools difonctionnels, trifonctionnels et tétrafonctionnels
(b) une diamine aromatique choisie parmi la diéthyltoluène diamine (DETDA) ou une amine de formule (I): 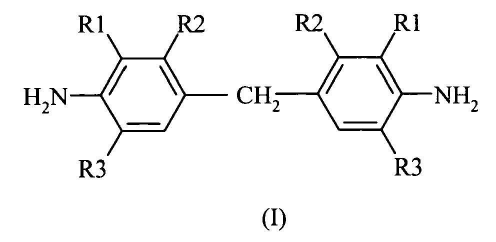
dans laquelle R1 et R3, identiques ou différents, représentent chacun indépendamment l'un de l'autre un groupe chosi parmi méthyle, éthyle, n-propyle et isopropyle, et R2 représente un atome d'hydrogène ou un atome de chlore, en une quantité telle que le rapport du nombre de fonctions amine de la diamine au nombre de fonctions isocyanate du prépolymère (a) est compris entre 0,92 et 0,98; et
(c) au moins 5 % en poids, rapporté à la masse totale de (a), (b) et (c), d'un copolymère à blocs polystyrène-*bloc*-polybutadiène-*bloc*-poly(méthacrylate de méthyle) (PS-*b*-PB-*b*-PMMA).

2. Composition polymérisable selon la revendication 1, **caractérisée par le fait qu'**elle comprend un ou plusieurs polyols choisis parmi les bisphénol A polypropoxylés comprenant en moyenne de 3,5 à 8 motifs d'oxyde de propylène de part et d'autre du groupement central bisphénol A et la famille des bisphénols A polyéthoxylés comprenant en moyenne de 3 à 6 motifs d'oxyde d'éthylène de part et d'autre du groupement central bisphénol A.

3. Composition polymérisable selon la revendication 1, **caractérisée par le fait qu'**elle comprend :
(a) un prépolymère de type polyuréthanne-düsocyanate obtenu par polycondensation d'un diisocyanate cycloaliphatique et de bisphénol A polypropoxylé comportant en moyenne de 1 à 10 motifs d'oxyde de propylène (PO) de part et d'autre du groupement central bisphénol A,
(b) une diamine aromatique de formule : 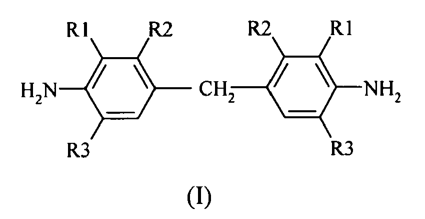
dans laquelle R1 et R3 identiques ou différents, représentent chacun indépendamment l'un de l'autre un groupe choisi parmi méthyle, éthyle, n-propyle et isopropyle, et R2 représente un atome d'hydrogène ou un atome de chlore,
en une quantité telle que le rapport du nombre de fonctions amine de la diamine de formule (I) au nombre de fonctions isocyanate du prépolymère (a) est compris entre 0,92 et 0,98,
(c) de 5% à 80 % en poids, rapporté à la masse totale de (a), (b) et (c), d'un copolymère à blocs polystyrène-*bloc*-polybutadiène-*bloc*-poly(méthacrylate de méthyle).

4. Composition polymérisable selon l'une quelconque des revendications précédentes, **caractérisée par le fait qu'**elle comprend un bisphénol A polypropoxylé comprenant en moyenne 3,5, 5,5 et 7,5 motifs d'oxyde de propylène de part et d'autre du groupement central bisphénol A.

5. Composition polymérisable selon l'une quelconque des revendications précédentes, **caractérisée par le fait qu'**elle comprend de 2 à 3 équivalents molaires de polyisocyanate par mole de polyol.

6. Composition polymérisable selon l'une quelconque des revendications précédentes, **caractérisée par le fait que** le polyisocyanate est un diisocyanate cycloaliphatique.

7. Composition polymérisable selon la revendication 6, **caractérisée par le fait que** le polyisocyanate est l'isophorone-diisocyanate (IPDI).

8. Composition polymérisable selon l'une quelconque des revendications précédentes, **caractérisée par le fait que** la diamine est une diamine de formule (1).

9. Composition polymérisable selon la revendication 8, **caractérisée par le fait que** la diamine est la 4,4'-méthylène-bis[3-chloro-2,6-diéthylaniline].

10. Composition polymérisable selon l'une quelconque des revendications 8 ou 9, **caractérisée par le fait que** le rapport du nombre de fonctions amine de la diamine de formule (I) au nombre de fonctions isocyanate du prépolymère (a) est compris entre 0,93 et 0,97, plus préférentiellement entre 0,94 et 0,96 et en particulier d'environ 0,95.

11. Composition polymérisable selon l'une quelconque des revendications précédentes, **caractérisée par le fait qu'**elle comprend de 30 à 80 % en poids, rapporté à la masse totale de (a), (b) et (c), de préférence de 40 à 60 % en poids et en particulier environ 50 % en poids d'un copolymère à bloc polystyrène-bloc-polybutadiène-bloc-poly(méthacrylate de méthyle) (PS-*b*-PB-*b*-PMMA).

12. Composition polymérisable selon l'une quelconque des revendications précédentes, **caractérisée par le fait que** le bloc de PMMA représente de 50 % à 80 % en poids, de préférence de 55 % à 75 % en poids, et en particulier de 60 à 70 % en poids de la masse moléculaire moyenne en poids du copolymère à blocs polystyrène-bloc-polybutadiène-bloc-poly(méthacrylate de méthyle).

13. Composition polymérisable selon la revendication 12, **caractérisée par le fait que** la masse moléculaire moyenne en poids dudit bloc poly(méthacrylate de méthyle) est de préférence comprise entre 10 000 et 100 000.

14. Composition polymérisable selon l'une quelconque des revendications précédentes, **caractérisée par le fait que** la structuration du matériau par les copolymères à blocs conduit à la formation de nanodomaines présentant une taille comprise entre 10 et 80 nm, en particulier entre 20 et 60 nm.

15. Matériau polymérisé transparent obtenu par durcissement thermique de la composition polymérisable selon l'une quelconque des revendications précédentes.

16. Matériau polymérisé transparent selon la revendication 15, **caractérisé par le fait qu'**il présente une résistance à la propagation de fissures, exprimée par le facteur critique d'intensité de contrainte K_{IC} (en MPa.m^{1/2}), supérieur à 1,45 MPa.m^{1/2}, de préférence supérieur à 1,50 MPa.m^{1/2}, et en particulier supérieur à 1,55 MPa.m^{1/2}.

17. Article optique comprenant un matériau polymérisé transparent selon l'une des revendications 15 et 16.

18. Article optique selon la revendication 17, **caractérisé par le fait qu'**il s'agit d'une lentille ophtalmique.

19. Procédé de préparation d'une composition polymérisable comprenant les étapes suivantes:
1. la préparation d'une première composante (A) par mélange:
- d'un prépolymère de type polyuréthanne obtenu par polycondensation:
- d'un ou plusieurs poly-isocyanates choisis parmi le xylylène diisocyanate (XDI), le méta-tétraméthyl-xylène-düsocyanate (TMXDI), les diisocyanates cycloaliphatiques, le trimère de l'isophorone diisocyanate, et le trimère de l'hexaméthylène diisocyanate; et
- d'un ou plusieurs polyols choisis parmi la famille des bisphénols A polypropoxylés comportant en moyenne de 1 à 10 motifs d'oxyde de propylène de part et d'autre du groupement central Bisphénol A, la famille des bisphénols A polyéthoxylés comportant en moyenne de 1 à 15 motifs d'oxyde d'éthylène de part et d'autre du groupement central bisphénol A, et la famille des polycaprolactones-alcools difonctionnels, trifonctionnels et tétrafonctionnels;
les fonctions isocyanate étant présentes en excès par rapport aux fonctions alcools;
- avec un copolymère à blocs polystyrène-*bloc*-polybutadiène-*bloc-*poly(méthacrylate de méthyle), le rapport en poids du prépolymère au copolymère à blocs étant compris entre 95/5 et 20/80,
2. la préparation d'une deuxième composante (B) par mélange:
- d'une diamine choisie parmi la diéthyltoluène-diamine (DETDA) ou une amine de formule (I): 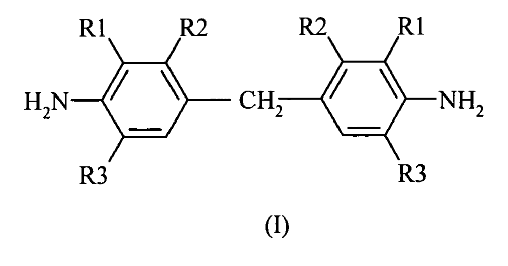
dans laquelle R1 et R3, identiques ou différents, représentent chacun indépendamment l'un de l'autre un groupe choisi parmi méthyle, éthyle, n-propyle et isopropyle, et R2 représente un atome d'hydrogène ou un atome de chlore,
- avec un copolymère à blocs polystyrène-bloc-polybutadiène-bloc-poly(méthacrylate de méthyle) le rapport en poids de l'amine au copolymère à blocs étant compris entre 95/5 et 20/80;
3. puis le mélange de la première composition (A) avec la deuxième composition (B) en des quantités respectives telles que le rapport du nombre de fonctions amine de la diamine au nombre de fonctions isocyanate du prépolymère (a) soit compris entre 0,92 et 0,98.
